# FASCICULE DE BREVET EUROPEEN

(11) **EP 2 929 707 B1**
(45) Date de publication et mention de la délivrance du brevet: **27.05.2020**
(21) Numéro de dépôt: 13808154.2
(22) Date de dépôt: 03.12.2013
(51) Int. Cl.: H04W 4/14, H04L 29/08

(54) **GESTION DE NOTIFICATIONS DANS UNE APPLICATION WEB MOBILE**
VERWALTUNG VON BENACHRICHTIGUNGEN IN EINER MOBILEN WEBANWENDUNG
MANAGEMENT OF NOTIFICATIONS IN A MOBILE WEB APPLICATION

(30) Priorité: 04.12.2012 FR 1261582
(43) Date de publication de la demande: 14.10.2015
(73) Titulaire: Orange, 75015 Paris (FR)
(72) Inventeur: FROMENTOUX, Gaël, F-22560 Pleumeur Bodou (FR); BRAUD, Arnaud, F-22300 Lannion (FR); STEPHAN, Emile, F-22560 Pleumeur Bodou (FR)
(86) Numéro de dépôt international: PCT/FR2013/052927
(87) Numéro de publication internationale: WO 2014/087094

(56) Documents cités:
- US-A1- 2010 319 062
- US-A1- 2012 042 004
- US-B1- 6 947 396
- Anonymous: "Push API", W3C , XP002699417, Extrait de l'Internet: URL:https://dvcs.w3.org/hg/push/raw-file/d efault/index.html [extrait le 2013-06-25]

## Description

La présente invention concerne le domaine de la gestion de notifications entre un terminal mobile et un serveur web sur lequel est installée une application dite « application web mobile ».

Les applications sur mobiles ont connu un développement important ces dernières années, ce qui a contribué à l'explosion de la quantité de données échangées entre les terminaux mobiles et les réseaux de communications mobiles, ainsi que de la quantité de messages de signalisation échangés sur ces réseaux.

La nouvelle génération d'applications sur mobiles, dites « applications web mobiles », repose sur l'utilisation d'un agent utilisateur installé sur un terminal mobile (typiquement un navigateur web) servant à contrôler une application web installée sur un serveur web distant, par l'intermédiaire d'un réseau d'accès de télécommunications mobile et du réseau internet.

Cette nouvelle génération d'applications web mobiles, de par sa nature décentralisée et interactive, risque d'accroître encore plus le phénomène de croissance de la quantité de données et de messages de signalisation échangés sur le réseau. En particulier, la gestion des notifications par ces applications web mobiles, importée des pratiques des applications « web » classiques dans les réseaux fixes, n'est pas adaptée à un environnement mobile.

Ainsi, l'utilisation de requêtes http pour la notification, par exemple pour des techniques dites de « polling http » ou « textstreams », entre le terminal mobile et le serveur web n'est pas optimale, car ces requêtes http engendrent généralement un grand nombre de messages http « keep-alive » afin de vérifier si la liaison radio est toujours établie avec le réseau, ce qui nécessite une liaison radio de données, sous la forme d'un canal de transport dédié DCH, devant être réétabli à chaque envoi de notification, et donc engendre la consommation d'une grande quantité de ressources radio.

En outre, des fonctions dites de « fast dormancy » ont été implémentées dans certains téléphones mobiles afin d'économiser les batteries des téléphones mobiles. Avec ce type de fonctions, l'établissement d'un canal de liaison radio de données devient long et coûteux, aussi bien en termes de consommation énergétique de la batterie que de signalisation sur le réseau, ce qui n'est pas compatible avec la multiplication des messages de notification engendrée par le développement des applications web mobiles.

Une implémentation technique de type « Push API », consistant à introduire un serveur proxy « push » dans le réseau, a été proposée dans le sens descendant, c'est-à-dire du serveur web vers les terminaux mobiles. Cf. http://dvcs.w3.org/hg/push/raw-file/default/index.html

Dans cette implémentation technique, un serveur proxy « push » est introduit dans le réseau de l'opérateur, entre le terminal mobile et le serveur web. Le serveur web peut envoyer à ce serveur proxy « push » un message « push » destiné à l'application web installée sur le terminal mobile TE, ce message « push » étant défini selon une interface de programmation (« API » en anglais) de service particulière. Le serveur proxy « push » va alors convertir ce message « push » en un nouveau message « push » selon un protocole de service particulier, et transmettre ce nouveau message « push » vers le terminal mobile TE où il sera analysé.

Une telle solution se limite cependant au seul sens descendant et n'adresse pas la problématique d'augmentation de la signalisation dans le sens montant, du terminal mobile sur lequel est installé l'agent utilisateur vers le serveur web.

Le brevet US 6,947,396 décrit pour sa part un système de filtrage d'information électronique à transférer à un terminal. Dans ce brevet US 6,947,396, un modèle de système WAP (pour Wireless Application Protocol) est mentionné, ce modèle impliquant une passerelle WAP convertissant, lorsque nécessaire, des messages provenant du terminal en messages selon un protocole Internet tel que le protocole TCP/IP. Ce brevet US 6,947,396 ne mentionne toutefois aucunement l'adaptation de ce modèle de système WAP à l'envoi de notifications d'un terminal vers un serveur web, ni les problèmes qu'une telle adaptation poserait.

Un des buts de la présente invention est d'améliorer la situation présente en remédiant aux inconvénients précités de l'art antérieur. L'invention est définie dans les revendications 1 à 13.

Il est ainsi proposé un procédé de gestion de notification entre un agent utilisateur installé dans un terminal mobile et un serveur web, comprenant les étapes suivantes, réalisées par un équipement intermédiaire :
réception, en provenance du terminal mobile, d'un message de notification conforme à un premier protocole adapté à la transmission dans un canal de signalisation, ledit message de notification comprenant des données de notification émanant de l'agent utilisateur ;
génération d'un message de notification conforme à un deuxième protocole adapté à la transmission dans le réseau internet, dans lequel sont insérées les données de notification ; et
émission, vers le serveur web, du message de notification selon le deuxième protocole.

Ce procédé permet de minimiser la quantité de signalisation engendrée entre l'agent utilisateur et le serveur web, en évitant l'établissement ou le ré-établissement d'un canal de transport dédié pour chaque notification envoyée de l'agent utilisateur vers l'application serveur. En outre, l'utilisation d'un canal de signalisation pour les messages de notification vers une application web émis par le terminal mobile permet l'envoi de ces notifications lorsque le téléphone mobile est en veille, sans avoir à le réveiller comme c'est le cas lorsqu'un canal de transport dédié doit être établi pour transmettre une notification. Ces opérations sont en outre effectuées de manière transparente pour le serveur web, ce qui permet aux développeurs d'applications web d'utiliser les fonctions de notification indépendamment du réseau d'accès et de la méthode de transmission choisie.

Selon un mode de réalisation avantageux, la génération du message de notification conforme au deuxième protocole comprend l'insertion, dans le message de notification conforme au deuxième protocole, d'au moins un paramètre d'accès à une application installée dans le serveur web, ce paramètre d'accès étant récupéré à partir d'au moins un paramètre compact d'accès inséré par le terminal mobile dans le message de notification selon le premier protocole, et la taille du paramètre compact d'accès étant inférieure à la taille du paramètre d'accès à l'application.

Ceci permet la diminution de la taille des messages de notification émis par le terminal mobile dans le sens montant, et donc les ressources allouées à ces notifications par le réseau d'accès utilisé par le terminal mobile, et permet de rendre compatible le principe de gestion selon la présente invention avec des protocoles existants d'élaboration de messages de taille réduite.

De manière avantageuse, le procédé comprend en outre les étapes suivantes :
réception, en provenance du terminal mobile, d'un message comprenant le au moins un paramètre d'accès au service fourni par le serveur web ;
génération, à partir du au moins un paramètre d'accès au service fourni par le serveur web, du au moins un paramètre compact d'accès ; et
émission, vers le terminal mobile, d'un message comprenant le paramètre compact d'accès.

La gestion de la conversion des paramètres d'accès à l'application web est alors effectuée de manière centralisée, au niveau de l'équipement chargé de convertir les messages de notification destiné à l'application serveur. Les terminaux mobiles n'ont ainsi pas besoin d'être modifié substantiellement pour pouvoir utiliser le procédé de la présente invention.

Il est également proposé un procédé d'envoi de notification d'un agent utilisateur installé dans un terminal mobile vers un serveur web, comprenant les étapes suivantes, réalisées par le terminal mobile :
génération d'un message de notification conforme à un premier protocole adapté à la transmission dans un canal de signalisation, dans lequel sont insérées des données de notification émanant de l'agent utilisateur ;
émission du message de notification vers un équipement intermédiaire apte à générer un message de notification conforme à un deuxième protocole, adapté à la transmission sur le réseau internet, dans lequel sont insérées les données de notifications et à transmettre au serveur web ledit message de notification selon le deuxième protocole.

Selon un mode de réalisation avantageux, la génération du message de notification conforme au premier protocole comprend l'insertion, dans le message de notification conforme au premier protocole, d'au moins un paramètre compact d'accès correspondant à au moins un paramètre d'accès à une application installée dans le serveur web, la taille du paramètre compact d'accès étant inférieure à la taille du paramètre d'accès à l'application serveur. Avantageusement, le procédé d'envoi comprend en outre l'émission, vers l'équipement intermédiaire, d'un message comprenant cet au moins un paramètre d'accès à l'application installée dans le serveur web et la réception, en provenance de l'équipement intermédiaire, d'un message comprenant cet au moins un paramètre compact d'accès.

Dans un mode de réalisation particulier, le procédé ci-avant comprend une phase de découverte au cours de laquelle le terminal mobile récupère l'adresse de l'équipement intermédiaire auprès d'un portail de découverte, cette adresse étant utilisée par le terminal mobile lors de l'émission du message de notification et/ou du message comprenant le paramètre d'accès à l'application. Ceci permet au réseau de l'opérateur d'aiguiller au mieux le terminal mobile vers l'équipement chargé de la gestion des notifications dans le sens montant.

Selon un mode de réalisation particulier, le message de notification conforme au premier protocole est un message de type SMS. Ceci permet d'appliquer le procédé de gestion de notifications selon la présente invention à des terminaux mobiles de manière quasi-transparente et sans avoir à modifier substantiellement leur mode de fonctionnement, en réutilisant un protocole d'élaboration de messages courts répandu.

Selon un autre mode de réalisation particulier, le message de notification conforme au deuxième protocole est une requête http. Ceci permet d'appliquer le procédé de gestion de notifications selon la présente invention à des serveurs d'application de manière transparente, sans aucune modification, en réutilisant le protocole http qu'ils utilisent habituellement pour échanger des notifications avec les terminaux mobiles.

Il est proposé en outre un équipement intermédiaire pour gérer les notifications entre un agent utilisateur installé sur un terminal mobile et un serveur web, comprenant :
un module d'émission-réception apte à recevoir, en provenance du terminal mobile, un message de notification conforme à un premier protocole adapté à la transmission dans un canal de signalisation, comprenant des données de notification émanant de l'agent utilisateur ; et
un module de traitement de données configuré pour générer un message de notification conforme à un deuxième protocole adapté à la transmission dans le réseau internet, dans lequel sont insérées les données de notification ;
le module d'émission-réception étant configuré pour émettre le message de notification selon le deuxième protocole vers le serveur web.

Dans cet équipement intermédiaire, le module de traitement de données peut avantageusement être configuré en outre pour récupérer au moins un paramètre d'accès à une application installée dans le serveur web, à partir d'au moins un paramètre compact d'accès inséré dans le message de notification conforme au premier protocole, la taille du paramètre compact d'accès étant inférieure à la taille du paramètre d'accès à l'application, et insérer le paramètre d'accès à l'application dans le message de notification conforme au deuxième protocole.

Par ailleurs, le module de traitement de données peut être avantageusement configuré, en outre, pour générer le paramètre compact d'accès à partir du paramètre d'accès à l'application reçu du terminal mobile, le module d'émission-réception étant configuré pour transmettre au terminal mobile le paramètre compact d'accès généré par le module de traitement de données.

Selon un mode particulier de réalisation, dans cet équipement intermédiaire :
le module d'émission-réception est apte à recevoir, en provenance du serveur web, un deuxième message de notification conforme au deuxième protocole adapté à la transmission dans le réseau internet, comprenant des données de notification émanant du serveur web,
le module de traitement de données est configuré pour générer un deuxième message de notification conforme à un protocole adapté à la transmission dans un canal de signalisation, dans lequel sont insérées les données de notification ;
le module d'émission-réception est configuré en outre pour émettre le deuxième message de notification conforme à un protocole adapté à la transmission dans un canal de signalisation vers le terminal mobile.

Un tel équipement intermédiaire est ainsi capable de gérer l'envoi de notifications entre une application web et un terminal mobile dans les deux sens.

En particulier, le canal de signalisation utilisé pour recevoir le premier message de notification provenant du terminal mobile est avantageusement différent du canal de signalisation utilisé pour émettre le deuxième message de notification vers le terminal mobile, afin de limiter les risques de saturation d'un canal de signalisation en cas d'envois massifs de notifications.

Il est également proposé un terminal mobile comprenant un module d'émission-réception et un module de traitement de données dans lequel est installé un agent utilisateur échangeant des données avec un serveur web, dans lequel le module de traitement de données est configuré pour générer un message de notification conforme à un premier protocole adapté à la transmission dans un canal signalisation, ce message de notification comprenant des données de notification émanant de l'agent utilisateur, et le module d'émission est configuré pour émettre le message de notification vers un équipement intermédiaire, apte à générer un message de notification conforme à un deuxième protocole adapté à la transmission sur le réseau internet, dans lequel sont insérées les données de notifications et à transmettre au serveur web ledit message de notification conforme au deuxième protocole.

Dans un tel terminal mobile, le module d'émission-réception peut, en outre, être apte à envoyer à l'équipement intermédiaire au moins un paramètre d'accès à l'application serveur et à recevoir, en retour, au moins un paramètre compact d'accès, le module de traitement de données étant configuré en outre pour insérer le paramètre compact d'accès dans le message de notification conforme au premier protocole.

Selon une implémentation particulière, les différentes étapes du procédé ci-avant sont mises en œuvre par un logiciel ou programme d'ordinateur, ce logiciel comprenant des instructions logicielles destinées à être exécutées par un module de traitement de données (e.g. un processeur) et étant conçu pour commander l'exécution des différentes étapes de ce procédé. En conséquence, l'invention vise aussi un programme, susceptible d'être exécuté par un ordinateur ou par un processeur de données, ce programme comportant des instructions pour commander l'exécution des étapes d'un procédé tel que mentionné ci-dessus. Ce programme peut utiliser n'importe quel langage de programmation, et être sous la forme d'un code source, code objet, ou de code intermédiaire entre code source et code objet, tel que dans une forme partiellement compilée, ou dans n'importe quelle autre forme souhaitable.

L'invention vise aussi un support d'informations, lisible par un ordinateur ou processeur de données, et comportant des instructions d'un programme tel que mentionné ci-dessus. Ce support d'informations peut être n'importe quelle entité ou dispositif capable de stocker le programme. Par exemple, le support peut comporter un moyen de stockage, tel qu'une ROM, par exemple un CD-ROM ou une ROM de circuit microélectronique, ou encore un moyen d'enregistrement magnétique, par exemple une disquette ou un disque dur. D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet. Alternativement, le support d'informations peut être un circuit intégré dans lequel le programme est incorporé, le circuit étant adapté pour exécuter ou pour être utilisé dans l'exécution du procédé en question.

D'autres caractéristiques et avantages de l'invention apparaîtront à la lecture dans la description détaillée ci-après de modes de réalisation particuliers, donnés à titre d'exemples non limitatifs, et des figures annexées dans lesquelles :
- la figure 1A représente schématiquement un système de télécommunications dans lequel un premier mode de réalisation du procédé de gestion de notification selon la présente invention peut être mis en œuvre ;
- la figure 1B illustre les étapes d'un procédé de gestion de notification selon un premier mode de réalisation de l'invention ;
- la figure 2A représente schématiquement un autre système de télécommunications dans lequel un deuxième mode de réalisation du procédé de gestion de notification selon la présente invention peut être mis en œuvre ; et
- la figure 2B illustre les étapes d'un procédé de gestion de notification selon un deuxième mode de réalisation de l'invention.

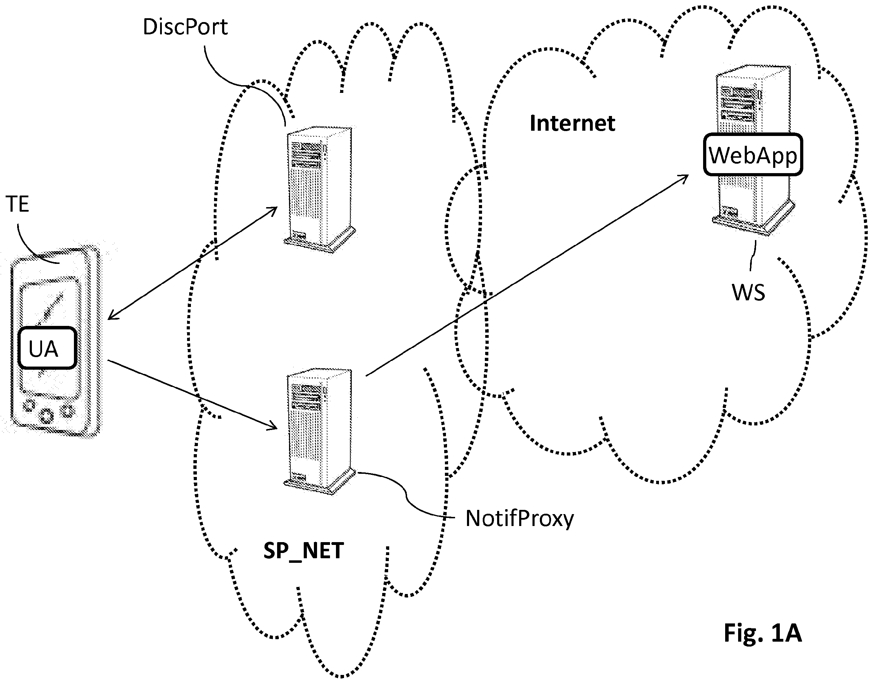

On se réfère tout d'abord à la **figure 1A****,** sur laquelle est représenté un système de télécommunications dans lequel un premier mode de réalisation du procédé de gestion de notification selon la présente invention peut être mis en œuvre.

Ce système comprend d'une part un terminal mobile TE, typiquement (mais non exclusivement) de type smartphone, comprenant d'une part un module d'émission-réception, disposant notamment d'une antenne radio pour échanger des messages avec un réseau de téléphonie mobile, et un module de traitement de données (typiquement un processeur associé à une mémoire vive et une mémoire morte), dans lequel est installé un agent utilisateur UA (« user agent » en anglais) pouvant être un navigateur web.

L'agent utilisateur UA installé sur ce terminal mobile TE échange des données avec une application web (désignée par WebApp) installée sur un serveur web distant (désigné par WS). Un tel serveur web est configuré pour recevoir et émettre des requêtes conformes à un protocole adapté à la transmission de données sur le réseau internet (par exemple le protocole http), lesquelles sont interprétées par l'application WebApp, afin de fournir un service à l'utilisateur du terminal mobile TE. A titre d'exemple, le service fourni par une telle application web peut être l'envoi d'une page internet, typiquement dans un format HTML, vers l'agent utilisateur UA.

Lorsque l'agent utilisateur UA souhaite transmettre une notification à l'application WebApp, par exemple suite à l'occurrence d'un événement particulier détecté par le terminal mobile TE (mesure de la position ou de l'état de disponibilité du terminal mobile), le terminal mobile TE envoie par voie radio des données de notification, émanant de l'agent utilisateur, vers le réseau de télécommunications d'un opérateur de téléphonie (SP_NET) auquel il a accès, par l'intermédiaire d'un réseau d'accès mobile (non représenté) avec lequel le terminal mobile TE peut échanger, d'une part, des données de signalisation au moyen d'un canal de signalisation et, d'autre part, des données de contenu utiles au moyen d'un canal de transport.

Le réseau SP_NET reçoit ces données de notification et les relaie, par le biais du réseau internet, vers le serveur web WS, afin que ces données de notification puissent être interprétées par l'application WebApp. A cette fin, le réseau de télécommunications SP_NET comprend un équipement intermédiaire, désigné ici par « NotifProxy », chargé de relayer les messages de notification dans le sens montant, i.e. émis par l'agent utilisateur UA à destination du serveur web WS, selon le procédé de gestion de notification décrit par la suite.

Cet équipement intermédiaire peut notamment être implémenté sous la forme d'un serveur proxy et comprend notamment un module d'émission-réception, apte aussi bien à recevoir les messages émis par le terminal mobile qu'à transmettre vers le réseau internet des messages destinés au serveur web WS, ainsi qu'un module de traitement de données (e.g. un processeur associé à une mémoire vive et une mémoire morte) capable de traiter les messages de notification reçus du terminal mobile pour les convertir en des messages de notification destinés au serveur web WS et adapté pour la transmission sur le réseau internet.

En outre, le réseau de télécommunications mobiles SP_NET peut avantageusement comprendre un portail de découverte, désigné par « DiscPort », permettant au terminal mobile TE de découvrir l'équipement intermédiaire NotifProxy, et notamment son adresse (typiquement son adresse IP), sur requête du terminal mobile TE, afin que ce dernier puisse échanger des données avec cet équipement intermédiaire.

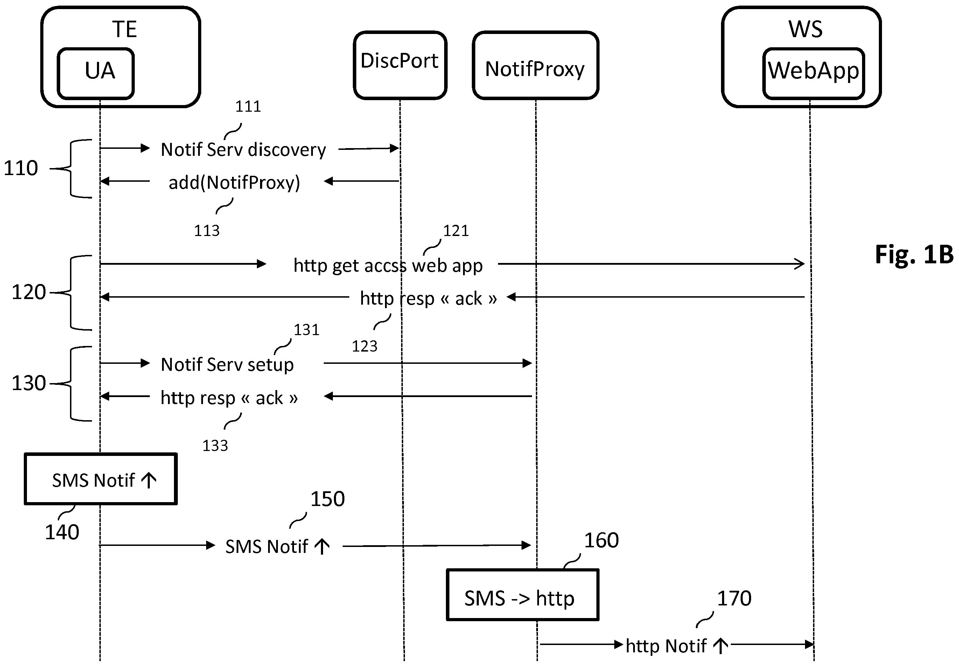

On se réfère maintenant à la **figure 1B** qui illustre un procédé de gestion de notification selon un premier mode de réalisation de la présente invention.

Ce procédé peut démarrer par une phase initiale (étape 110) de découverte, au cours de laquelle l'équipement intermédiaire NotifProxy est découvert par le terminal mobile TE, en d'autres termes au cours de laquelle le terminal mobile récupère l'adresse add(NotifProxy) de l'équipement intermédiaire NotifProxy, ce qui est particulièrement approprié lorsque ce terminal mobile TE ne connaît pas au préalable l'adresse de cet équipement.

Cette phase de découverte est mise en œuvre au moyen du portail de découverte DiscPort. Le terminal mobile TE envoie une requête en découverte de serveur de notification (étape 111) à ce portail de découverte DiscPort, lequel vérifie s'il y a bien un équipement intermédiaire désigné pour gérer les notifications entre l'agent utilisateur UA et l'application WebApp et, si c'est bien le cas, retourne au terminal mobile TE (étape 113), dans un message de réponse, l'adresse add(NotifProxy) de l'équipement intermédiaire NotifProxy en question.

Afin de procéder à une telle vérification, la requête en découverte peut comprendre un identifiant de l'application WebApp installée sur le serveur web WS, que le portail de découverte DiscPort utilise pour chercher un éventuel équipement intermédiaire associé dans une table d'association mémorisée dans le portail de découverte, dans laquelle sont enregistrés les adresses du ou des équipements intermédiaires chargés de cette fonction pour une ou plusieurs application web installée sur un serveur web distant.

Ensuite, l'agent utilisateur UA du terminal mobile peut procéder à l'installation de l'application web (étape 120), en envoyant une requête (typiquement de type http) au serveur web, afin d'obtenir en retour des données d'application comprenant notamment des données correspondant à une page web, par exemple au format html, pouvant être affichée par l'agent utilisateur sur l'écran du terminal mobile TE. Ces données d'application peuvent également comporter un script, par exemple selon le langage JavaScript, servant à déclencher les étapes suivantes du procédé.

Le service de gestion de notifications par l'équipement intermédiaire NotifProxy peut ensuite être activé (étape 130), par exemple sur instruction du script téléchargé du serveur web, au moyen de l'envoi par le terminal mobile TE d'un message de requête d'activation (étape 131) vers l'équipement intermédiaire NotifProxy, afin que ce dernier lance l'activation de ce service. L'équipement intermédiaire renvoie alors (étape 133) un message d'acquittement d'activation au terminal mobile TE, afin de prévenir l'agent utilisateur UA qu'il peut commencer à lui envoyer des notifications dans le sens montant.

Ainsi, lorsque l'agent utilisateur UA souhaite envoyer une notification à l'application WebApp, plutôt que d'envoyer directement vers le serveur web WS un message de notification sous la forme d'une requête selon le protocole http, qui nécessiterait l'établissement systématique d'un canal de transmission dédié, le terminal mobile TE élabore (étape 140) un message de notification contenant :
- des données de notifications, émanant de l'agent utilisateur UA et destinées à l'application WebApp, lesquelles correspondent à l'événement à notifier à cette application ;
- une adresse de destinataire correspondant à l'adresse de l'équipement intermédiaire add(NotifProxy).

Ce message de notification est élaboré conformément à un premier protocole adapté à la transmission sur un canal de signalisation, afin d'éviter d'avoir à établir un canal de transport dédié, de type canal DCH, comme c'est le cas pour une requête http de notification à remonter au serveur web.

On entend ici par « canal de signalisation » un canal de transmission radio dans lequel des données de signalisation sont transmises d'un terminal mobile vers le réseau d'accès mobile, et vice versa, dans la couverture duquel le terminal mobile se situe. Un tel canal de signalisation est typiquement actif de façon permanente ou quasi-permanente, contrairement à un canal de transport dédié, dans la mesure où des données de signalisation sont échangées fréquemment avec le réseau.

Un tel canal de signalisation peut, en outre, être considéré comme étant un canal partagé, dans la mesure où plusieurs terminaux peuvent utiliser le même canal de signalisation dans une même cellule du réseau d'accès mobile, voire plusieurs applications. En outre, des données de service (par exemple des SMS) aussi bien que de la signalisation mobile ou des notifications peuvent y transiter.

Le message de notification peut ainsi être implémenté sous la forme d'un message de type SMS (pour « Short Message Service »), conformément au protocole SMS tel que défini dans la norme GSM. Ce protocole SMS est en effet adapté à la transmission sur des canaux de signalisation partagés et n'utilise ainsi aucun de canal de transmission dédié de type DCH.

En particulier, les messages de notification au format SMS peuvent être transmis dans un canal de signalisation SACCH (pour « Slow Associated Control Channel » en anglais), qui est un canal de signalisation permanent permettant la remontée de données de signalisation des téléphones mobiles vers le réseau (par exemple des rapports de mesure quant au niveau de puissance reçu des signaux émis par la station de base de la cellule où se trouve les téléphones mobiles). Alternativement, les messages de notification au format SMS peuvent être transmis dans un canal de signalisation SDCCH (pour « Stand-alone Dedicated Control Channel » en anglais),

Le message de notification ainsi élaboré est alors transmis (étape 150) dans le canal de signalisation, dans le réseau d'accès mobile, vers le réseau de télécommunications SP_NET, où il est transmis jusqu'à l'équipement intermédiaire NotifProxy au moyen de l'adresse add(NotifProxy).

Après réception de ce message de notification, l'équipement intermédiaire NotifProxy génère (étape 160) un nouveau message de notification conformément à un deuxième protocole qui, lui, est adapté à la transmission dans le réseau internet, dans lequel l'équipement intermédiaire NotifProxy insère les données de notification extraites du message de notification reçu. En particulier, ce nouveau message de notification peut être mis en œuvre sous la forme d'une requête http adressée au serveur web WS, contenant les données de notification émanant de l'agent utilisateur UA.

Une fois ce nouveau message de notification généré, l'équipement intermédiaire NotifProxy envoie ce nouveau message (étape 170) vers le serveur web WS par le biais du réseau Internet. Lorsque le serveur web WS reçoit ce message de notification, les données de notification peuvent être fournies à l'application WebApp et interprétées par cette application, qui peut éventuellement retourner une requête http avec des données de réponse ou de mise à jour, destinées à l'agent utilisateur UA, vers le terminal mobile.

Lorsque le premier protocole utilisé impose une taille de message limitée, il est possible que cette taille ne soit pas suffisante pour transmettre les données de notification avec le(s) paramètre(s) d'accès à l'application WebApp. C'est en particulier le cas pour des messages de type SMS présentant une taille maximale de 140 octets (avec un encodage sur 8 bits). Afin de pallier cet inconvénient, certains paramètres transmis dans le message de notification selon le premier protocole peuvent être compacts afin de pouvoir être contenus dans ce type de message.

Ainsi, considérons l'adresse URL classique suivante, qui serait utilisée dans une requête http classique de notification émise par l'agent utilisateur UA directement vers le serveur web WS : http ://BaseURL?P0=V0&...P1=V1&...&Pi=Vi&Pi+1=Vi+1&...&Pn=Vn
avec les paramètres d'accès à l'application WebApp suivants :
- BaseURL est l'adresse URL donnant accès au service fournie par l'application WebApp. Ce paramètre ne change pas durant l'utilisation de ce service ;
- P0 est un paramètre fixe d'unicité du service en question, et V0 est la valeur associée à ce paramètre, lesquels forment avec BaseURL une combinaison unique définissant ce service (il peut exister plusieurs paramètres fixes Pj d'unicité) ;
- P1,...,Pi sont un premier ensemble de paramètres quasi-fixes (i.e. qui ne changent pas substantiellement durant l'utilisation du service), tels qu'un identifiant (« login »), un mot de passe ou un type de dispositif (« deviceType ») par exemple, et V1,...,Vi sont des valeurs associées à ces paramètres P1 à Pi ;
- Pi+1,...,Pn sont un deuxième ensemble de paramètres qui varient durant l'utilisation du service, et Vi+1,...,Vn sont des valeurs associées à ces paramètres Pi+1 à Pn ; une information de notification envoyée par l'agent utilisateur UA vers serveur web WS rentre dans cette catégorie.

En fonction de la longueur de ces différents paramètres, ce type d'adresse URL ne peut pas toujours être insérée dans un message de notification de taille limitée tel qu'un SMS.

Aussi, selon un mode de réalisation particulier, lors de la génération du message de notification selon le premier protocole, le terminal mobile TE insère dans ce message un (ou plusieurs) paramètre compact d'accès, correspondant à un (ou plusieurs) des paramètres d'accès à l'application WebApp, à la place de ce(s) paramètre(s) d'accès. Un tel paramètre compact d'accès présente une taille inférieure au paramètre d'accès qu'il remplace, de sorte à réduire la place prise par ce paramètre d'accès dans le message.

Lorsque l'équipement intermédiaire NotifProxy reçoit un tel message de notification, il récupère le (ou les) paramètre d'accès qui a été remplacé à partir du (ou des) paramètre compact d'accès, par exemple au moyen d'une table d'association dans laquelle sont mémorisées les paramètres d'accès et leurs paramètres compacts d'accès correspondants, et insère le paramètre d'accès ainsi récupérés dans le message de notification selon le deuxième protocole, destiné à être reçu par le serveur web WS.

La correspondance entre les paramètres d'accès et leurs paramètres compacts d'accès peut être établie par l'équipement intermédiaire NotifProxy lui-même, lequel génère des paramètres compacts d'accès à partir des paramètres d'accès reçus du terminal mobile.

Dans un tel cas, le message de requête d'activation transmis (étape 131) lors de la phase d'activation du service de gestion peut contenir un ou plusieurs paramètre(s) d'accès à l'application WebApp, ce ou ces paramètre(s) d'accès étant utilisés par l'équipement intermédiaire NotifProxy pour générer un ou plusieurs paramètre(s) compact(s) d'accès, qui sont d'une part mémorisés dans une table d'association, en correspondance avec les paramètres d'accès qui ont servi à les générer, et d'autre part insérés dans le message d'acquittement d'activation qui est renvoyé (étape 133) au terminal mobile TE.

A titre d'exemple, les paramètres d'accès suivants peuvent ainsi être transmis dans ce message de requête d'activation :
- L'adresse URL de base, donnant accès au service : **BaseURL**
- Le paramètre d'unicité du service et la valeur associée **P0=V0**
- Les paramètres fixes et leurs valeurs associées : **P1=V1,,...,Pi=Vi**
- Les paramètres **Pi+1,...,Pn,** sans leurs valeurs associées Vi+1 à Vn

Après avoir reçu cette requête d'activation et extrait les paramètres d'accès ci-avant, l'équipement intermédiaire NotifProxy génère les paramètres compacts d'accès suivants :
- Un paramètre d'identification de service ServiceID et une valeur associée Id, représentant à la fois l'adresse BaseURL et le paramètre P0 d'unicité du service. Comme cet identifiant de service est lié à un agent utilisateur UA spécifique, il peut avoir une taille réduite par rapport à la somme des tailles de l'adresse de base URL et du paramètre d'unicité. Cette taille peut être par exemple d'un seul caractère.
- Des valeurs K1 à Kn, associées respectivement à chacun des paramètres d'accès P1 à Pn et présentant une taille réduite par rapport aux valeurs V1 à Vn associées initialement à ces paramètres, par exemple un seul caractère.

L'équipement intermédiaire NotifProxy retourne alors, dans le message d'acquittement d'activation décrit précédemment, les paramètres compacts d'accès suivants à l'agent utilisateur UA :
ServiceId=Id et P1=K1&...&Pn=Kn

Lorsque, par la suite, l'agent utilisateur UA élabore un message de notification à destination de l'application WebApp, ces paramètres compacts d'accès ServiceId=Id et P1=K1&...&Pn=Kn sont insérés dans ce message de notification, à la place des paramètres d'accès BaseURL et P0=V0&...&Pn=Vn.

Ce message de notification, optimisé en taille, peut alors être transmis vers l'équipement intermédiaire NotifProxy (lors de l'étape 150), lequel peut ainsi, à partir des paramètres ServiceId=Id et P1=K1&...&Pn=Kn, récupérer les paramètres d'accès BaseURL, P0=V0 et P1=V1&...&Pn=Vn qu'il a mémorisé initialement lors de le phase d'activation du service de gestion de notifications et construire une requête http à partir de ces paramètres d'accès BaseURL, P0=V0 et P1=V1&...&Pn=Vn, ainsi que des données de notification transmis dans le message de notification provenant du terminal mobile TE (étape 160). Cette requête http peut alors être transmise sur le réseau internet vers le serveur web WS, afin d'être interprétée par l'application WebApp installée sur ce serveur web, de sorte que la gestion des notifications dans le sens montant soit modifiée de façon transparente pour l'application WebApp et le serveur web WS.

Dans un tel mode de réalisation où certains (voire l'ensemble) des paramètres d'accès BaseURL, P0=V0 et P1=V1&...&Pn=Vn sont stockés dans l'équipement intermédiaire NotifProxy, il s'avère utile de pouvoir mettre à jour ces paramètres et valeurs depuis le terminal mobile TE. Pour ce faire, un paramètre d'identification du type de message peut être avantageusement inséré dans les messages transmis de l'agent utilisateur vers l'équipement intermédiaire. Un tel paramètre d'identification peut prendre la forme d'un paramètre désigné par « MessageTYPE » associé à l'une des trois valeurs suivantes :
- « 0 » pour désigner un message de terminaison du service de gestion de notification dans le sens montant, visant à terminer le processus de conversion des messages de notification au niveau de l'équipement intermédiaire NotifProxy et ainsi repasser dans un mode de notification où les messages de notification, dans le sens montant, sont transmis directement vers le serveur web WS selon le protocole http, sans transiter par l'équipement intermédiaire NotifProxy. Ce type de message n'est pas destiné à être retransmis vers le serveur web WS ;
- « 1 » pour désigner un message de notification contenant des données de notification émanant de l'agent utilisateur UA et destinées au serveur web WS, tel que décrit précédemment ;
- « 2 » pour désigner un message de mise à jour d'un ou de plusieurs paramètres d'accès (BaseURL,P0...Pn,V1...Vn) stockés dans l'équipement intermédiaire NotifProxy. Ce type de message contient un ou plusieurs nouveaux paramètres d'accès BaseURL, P0,...Pn et/ou nouvelles valeurs V1 à Vn qui remplacent alors les anciens paramètres d'accès, ou les anciennes valeurs correspondantes de ces paramètres d'accès, dans la table d'association mémorisée par l'équipement intermédiaire NotifProxy. Ce type de message n'est pas non plus destiné à être retransmis vers le serveur web WS.

Ainsi, sur réception d'un message de notification comprenant la donnée « MessageTYPE=0 », l'équipement intermédiaire NotifProxy est informé que le terminal mobile TE désire interrompre le service de gestion des notifications montantes selon la présente invention. Les données d'accès relatives à l'application WebApp peuvent alors être effacées de l'équipement intermédiaire NotifProxy.

Sur réception d'un message de notification comprenant la donnée « MessageTYPE=2 », l'équipement intermédiaire NotifProxy extrait les nouveaux paramètres d'accès et/ou nouvelles valeurs de ces paramètres transmis dans le message reçu, afin d'utiliser par la suite ces nouvelles informations d'accès lors de la génération du message de notification selon le deuxième protocole, destiné à être transmis au serveur web WS.

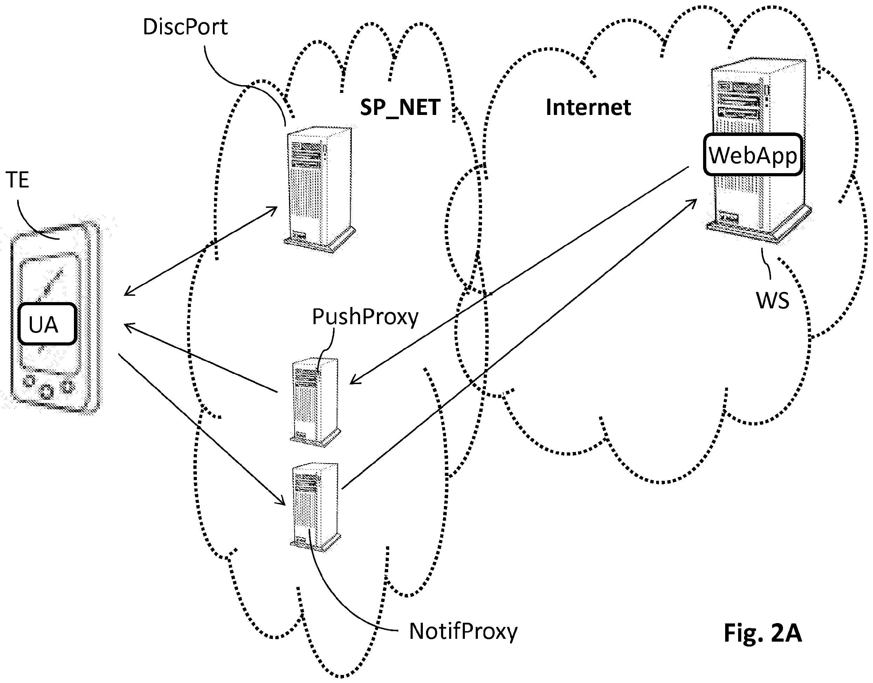

On se réfère maintenant à la **figure 2A** qui illustre un système de télécommunications pour la mise en œuvre d'un procédé de gestion de notification selon un autre mode de réalisation de la présente invention.

Ce système est similaire au système illustré précédemment en figure 2A, à la différence près que le réseau de télécommunications comprend en outre un deuxième équipement intermédiaire, désigné par « PushProxy », servant à retransmettre les messages de notifications dans le sens descendant, de l'application WebApp installée sur le serveur web WS vers l'agent utilisateur UA installé dans le terminal mobile TE.

Un tel équipement PushProxy peut prendre la forme d'un serveur « proxy » et comprend notamment :
- un module d'émission-réception apte, d'une part, à recevoir des requêtes de notification selon le deuxième protocole évoqué précédemment (typiquement des requêtes http) émises par le serveur web WS et, d'autre part, à émettre des messages de notification selon le premier protocole évoqué précédemment (par exemple dans un format SMS) vers l'agent utilisateur UA ; et
- un module de traitement de données (par exemple un processeur associé à une mémoire vive et une mémoire morte) servant à analyser les requêtes de notification reçus pour en déduire les messages de notification à transmettre à l'agent utilisateur UA.

Les équipements intermédiaires NotifProxy et PushProxy sont ici illustrés comme étant des équipements distincts, sans que l'invention ne se limite à ce seul cas de figure, les fonctionnalités de ces deux équipements pouvant être combinées au sein d'un seul et même équipement intermédiaire, lequel peut être implémenté sous la forme d'un serveur proxy bidirectionnel, gérant l'ensemble des notifications entre l'agent utilisateur UA et le serveur web WS.

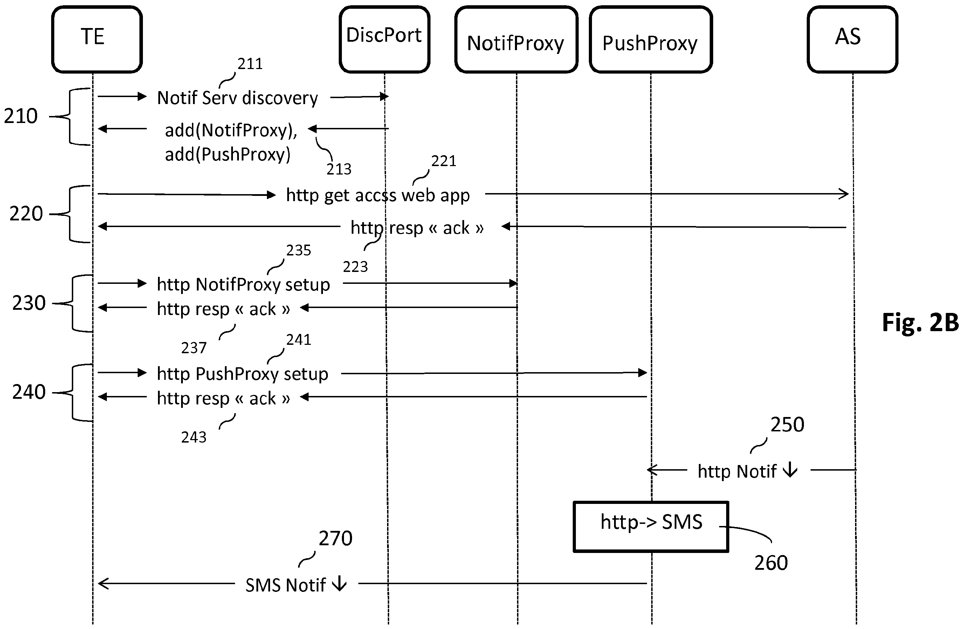

On se réfère maintenant à la **figure 2B** qui illustre un procédé de gestion de notification selon un deuxième mode de réalisation de la présente invention.

Ce procédé débute avantageusement par une phase (étape 210) de découverte des deux équipements intermédiaires NotifProxy et PushProxy, similaire à la phase 110 précédemment décrite, à la différence que le portail de découverte DiscPort retourne (étape 213) au terminal mobile TE non seulement l'adresse add(NotifProxy) de l'équipement intermédiaire NotifProxy, mais également l'adresse add(PushProxy) de l'équipement intermédiaire PushProxy, au sein d'un message de réponse faisant suite à la réception (étape 211) d'une requête en découverte émise par le terminal mobile TE. Bien entendu, dans le mode de réalisation où les équipements NotifProxy et PushProxy sont implémentés sous la forme d'un unique équipement, une adresse unique est retournée au terminal mobile TE.

Le terminal mobile TE peut ensuite demander l'accès à l'application WebApp installée dans le serveur web WS (étape 220), ainsi que déclencher l'action du service de gestion de notification dans le sens montant auprès de l'équipement intermédiaire NotifProxy (étape 230), de manière similaire aux étapes 120 et 130 décrites précédemment.

Afin d'activer également en place le service de gestion de notifications dans le sens descendant, une phase d'activation d'un tel service est en outre mis en œuvre (étape 240) par le terminal mobile T, en échangeant des données avec l'équipement intermédiaire PushProxy de manière similaire à ce qui est fait lors de l'étape 230.

Ainsi, une requête http d'activation du service de gestion dans le sens descendant est transmise (étape 241) à l'équipement intermédiaire PushProxy en utilisant l'adresse add(PushProxy) récupérée lors de la phase 210 de découverte. Suite à la réception de cette requête http, l'équipement intermédiaire PushProxy renvoie un message d'acquittement selon le protocole http au terminal mobile TE (étape 243), afin de confirmer à ce dernier que le service de gestion de notifications dans le sens descendant est bien activé et éventuellement lui transmettre des paramètres compacts d'accès tels que décrits précédemment.

Une fois le service de gestion de notifications activé aussi bien dans le sens montant que le sens descendant, les notifications échangées entre l'agent utilisateur UA et l'application WebApp se font par l'intermédiaire d'un des deux équipements intermédiaires NotifProxy ou PushProxy.

Dans le sens montant, les notifications sont transmises similairement à ce qui a été décrit précédemment en relation avec la figure 1A.

Dans le sens descendant, une requête de notification selon le deuxième protocole (typiquement http) émise (étape 250) par l'application WebApp à destination de l'agent utilisateur UA est reçue par l'équipement intermédiaire PushProxy, lequel génère alors (étape 260) un message de notification conforme à un protocole (par exemple de format SMS) adapté à la transmission dans un canal de signalisation et transmet (étape 270) ce message de notification, dans ce canal de signalisation, vers le terminal mobile TE où il peut être interprété par l'agent utilisateur UA.

Dans un cas de figure, le canal de signalisation utilisé pour les messages de notification est le même dans le sens montant et le sens descendant. Dans ce cas, le protocole utilisé pour les messages entre le terminal mobile et l'équipement intermédiaire NotifProxy peut être le même dans ces deux sens.

Dans un autre cas de figure, le canal de signalisation utilisé pour les messages de notification dans le sens descendant peut être différent du canal de signalisation utilisé pour les messages de notification dans le sens montant (à titre d'exemple non limitatif, lorsque les messages de notifications sous la forme de SMS, le canal de signalisation de « paging » PCH peut être employé dans le sens descendant, tandis qu'un canal de signalisation SACCH ou SCCCH est employée dans le sens montant), afin d'éviter une potentielle saturation d'un canal de signalisation si les notifications se multiplient.

Dans ce dernier cas, un même protocole (i.e. le format SMS) peut être utilisé, entre le terminal mobile et l'équipement intermédiaire NotifProxy, pour les deux sens de transmission. Alternativement, il est aussi possible d'utiliser un premier protocole adapté au canal de signalisation utilisé pour les messages de notification dans le sens montant et un deuxième protocole, différent du premier, adapté au canal de signalisation utilisé pour les messages de notification dans le sens descendant.

Bien entendu, l'invention n'est pas limitée aux exemples de réalisation décrits et représentés ci-dessus, à partir desquels on pourra prévoir d'autres modes et d'autres formes de réalisation, sans pour autant sortir du cadre de l'invention.

En outre, un seul agent utilisateur UA a été illustré sur les figures 1A et 2A, mais l'invention s'étend bien entendu à un nombre quelconque d'agents utilisateurs, installés sur un ou plusieurs terminaux mobiles, échangeant des données de notification avec une application web installée sur un serveur web distant.

De plus, les messages de notifications échangés entre le terminal mobile et les équipements intermédiaires NotifProxy et PushProxy ont été illustrés comme étant sous la forme de SMS. Cependant, l'invention ne se limite pas à ce seul type de message et peut s'appliquer à d'autres formes de messages, tels que des messages de type USSD (pour « Universal Supplementary Service Data » en anglais), ne nécessitant pas l'établissement ou le ré-établissement systématique d'un canal dédié de transmission pour chaque notification à échanger entre le terminal mobile TE et le serveur web WS.

Similairement, les messages de notifications échangés entre le serveur web et les équipements intermédiaires NotifProxy et PushProxy ont été illustrés comme étant des messages construits selon le protocole http. Cependant, l'invention ne se limite pas à ce seul type de message et peut s'appliquer à toute autre protocole de communication de données sur un réseau internet, tel que le protocole WebSocket par exemple, dans la mesure où l'utilisation d'un tel protocole, adapté à la transmission de données sur un réseau IP, nécessite l'établissement ou le ré-établissement systématique d'un canal dédié de transmission pour chaque notification à échanger entre le terminal mobile TE et le serveur web WS.

## Revendications

1. Procédé de gestion de notification entre un agent utilisateur (UA) installé dans un terminal mobile (TE) et un serveur web (WS), le procédé comprenant les étapes suivantes, réalisées par un équipement intermédiaire (NotifProxy) :
réception (150), en provenance du terminal mobile, d'un message de notification conforme à un premier protocole adapté à la transmission dans un canal de signalisation, ledit message de notification comprenant des données de notification émanant de l'agent utilisateur et au moins un paramètre compact d'accès inséré par le terminal mobile, ledit au moins un paramètre compact d'accès correspondant à au moins un paramètre d'accès à une application (WebApp) installée dans le serveur web, la taille dudit au moins un paramètre compact d'accès étant inférieure à la taille dudit au moins un paramètre d'accès à l'application (WebApp) installée dans le serveur web ;
récupération dudit au moins un paramètre d'accès à l'application à partir dudit au moins un paramètre compact d'accès ;
génération (160) d'un message de notification conforme à un deuxième protocole adapté à la transmission dans le réseau internet, dans lequel sont insérés les données de notification et ledit au moins un paramètre d'accès à l'application ; et
émission (170), vers le serveur web (WS), du message de notification selon le deuxième protocole.

2. Procédé de gestion de notification selon la revendication 1, comprenant en outre les étapes suivantes :
réception (131), en provenance du terminal mobile, d'un message comprenant ledit au moins un paramètre d'accès à l'application ;
génération, à partir dudit au moins un paramètre d'accès à l'application, du au moins un paramètre compact d'accès ; et
émission (133), vers le terminal mobile, d'un message comprenant le paramètre compact d'accès.

3. Procédé d'envoi de notification d'un agent utilisateur (UA) installé dans un terminal mobile (TE) vers un serveur web (WS), le procédé comprenant les étapes suivantes, réalisées par le terminal mobile :
génération (140) d'un message de notification conforme à un premier protocole adapté à la transmission dans un canal de signalisation, dans lequel sont insérés des données de notification émanant de l'agent utilisateur et au moins un paramètre compact d'accès inséré par le terminal mobile correspondant à au moins un paramètre d'accès à une application (WebApp) installée dans le serveur web, la taille du paramètre compact d'accès étant inférieure à la taille du paramètre d'accès à l'application;
émission (150) du message de notification vers un équipement intermédiaire (NotifProxy) provoquant la génération par ledit équipement intermédiaire (160) d'un message de notification conforme à un deuxième protocole, adapté à la transmission sur le réseau internet, dans lequel sont insérées les données de notifications et ledit au moins un paramètre d'accès à l'application, et à transmettre (170) au serveur web ledit message de notification selon le deuxième protocole.

4. Procédé d'envoi de notification selon la revendication 3, comprenant en outre les étapes suivantes :
émission (131), vers l'équipement intermédiaire (NotifProxy), d'un message comprenant ledit au moins un paramètre d'accès à l'application (WebApp) installée dans le serveur web ; et
réception (133), en provenance de l'équipement intermédiaire, d'un message comprenant ledit au moins un paramètre compact d'accès.

5. Procédé selon l'une des revendications 1 à 4, comprenant en outre une phase de découverte (110) au cours de laquelle le terminal mobile récupère l'adresse de l'équipement intermédiaire (add(NotifProxy)) auprès d'un portail de découverte (DiscPort), ladite adresse étant utilisée par le terminal mobile lors de l'émission du message de notification et/ou du message comprenant le paramètre d'accès à l'application.

6. Equipement intermédiaire (NotifProxy) pour gérer les notifications entre un agent utilisateur (UA) installé sur un terminal mobile (TE) et un serveur web (WS), l'équipement comprenant :
un module d'émission-réception apte à recevoir, en provenance du terminal mobile, un premier message de notification conforme à un premier protocole adapté à la transmission dans un canal de signalisation, comprenant des données de notification émanant de l'agent utilisateur et au moins un paramètre compact d'accès ; et
un module de traitement de données configuré pour :
générer un premier message de notification conforme à un deuxième protocole adapté à la transmission dans le réseau internet, dans lequel sont insérées les données de notification ;
récupérer au moins un paramètre d'accès à une application (WebApp) installée dans le serveur web, à partir dudit au moins un paramètre compact d'accès, la taille du paramètre compact d'accès étant inférieure à la taille du paramètre d'accès à l'application ; et
insérer ledit au moins un paramètre d'accès à l'application dans le premier message de notification conforme au deuxième protocole ;
le module d'émission-réception étant configuré pour émettre le premier message de notification selon le deuxième protocole vers le serveur web.

7. Equipement intermédiaire selon la revendication 6, dans lequel le module de traitement de données est en outre configuré pour générer le paramètre compact d'accès à partir du paramètre d'accès à l'application reçu du terminal mobile, le module d'émission-réception étant configuré pour transmettre au terminal mobile le paramètre compact d'accès généré par le module de traitement de données.

8. Equipement intermédiaire selon l'une des revendications 6 à 7, dans lequel :
le module d'émission-réception est apte à recevoir (250), en provenance du serveur web, un deuxième message de notification conforme au deuxième protocole adapté à la transmission dans le réseau internet, comprenant des données de notification émanant du serveur web ;
le module de traitement de données est configuré pour générer (260) un deuxième message de notification conforme à un protocole adapté à la transmission dans un canal de signalisation, dans lequel sont insérées les données de notification ;
le module d'émission-réception étant configuré en outre pour émettre (270) le deuxième message de notification conforme à un protocole adapté à la transmission dans un canal de signalisation vers le terminal mobile.

9. Equipement intermédiaire selon la revendication 8, dans lequel le canal de signalisation utilisé pour recevoir le premier message de notification provenant du terminal mobile est différent du canal de signalisation utilisé pour émettre le deuxième message de notification vers le terminal mobile.

10. Terminal mobile (TE) comprenant un module d'émission-réception et un module de traitement de données dans lequel est installé un agent utilisateur (UA) échangeant des données avec un serveur web (WS), dans lequel :
le module de traitement de données est configuré pour générer un message de notification conforme à un premier protocole adapté à la transmission dans un canal signalisation, le message de notification comprenant des données de notification émanant de l'agent utilisateur et au moins un paramètre compact d'accès correspondant à au moins un paramètre d'accès à une application (WebApp) installée dans le serveur web, la taille du paramètre compact d'accès étant inférieure à la taille du paramètre d'accès à l'application serveur;
le module d'émission-réception est configuré pour émettre le message de notification vers un équipement intermédiaire (NotifProxy), provoquant la génération par ledit équipement intermédiaire d'un message de notification conforme à un deuxième protocole adapté à la transmission sur le réseau internet, dans lequel sont insérées les données de notifications et le paramètre d'accès à une application (WebApp) installée dans le serveur web, et à transmettre au serveur web ledit message de notification conforme au deuxième protocole.

11. Terminal mobile selon la revendication 10, dans lequel le module d'émission-réception est apte en outre à envoyer à l'équipement intermédiaire ledit au moins un paramètre d'accès à l'application serveur et à recevoir, en retour, ledit au moins un paramètre compact d'accès, le module de traitement de données étant configuré en outre pour insérer ledit paramètre compact d'accès dans le message de notification conforme au premier protocole.

12. Programme d'ordinateur comprenant des instructions pour la mise en œuvre des étapes du procédé selon l'une des revendications 1 à 5, lorsqu'il est exécuté par un module de traitement de données.

13. Support d'informations, lisible par un ordinateur ou un processeur de données, comportant des instructions d'un programme d'ordinateur selon la revendication 12.

## Patentansprüche

1. Verfahren zur Benachrichtigungsverwaltung zwischen einem in einem mobilen Endgerät (TE) installierten Benutzeragenten (UA) und einem Webserver (WS), wobei das Verfahren die folgenden Schritte enthält, die von einer Zwischeneinrichtung (NotifProxy) durchgeführt werden:
Empfang (150) einer Benachrichtigung entsprechend einem für die Übertragung in einem Signalisierungskanal geeigneten ersten Protokoll vom mobilen Endgerät, wobei die Benachrichtigung vom Benutzeragenten kommende Benachrichtigungsdaten und mindestens einen vom mobilen Endgerät eingefügten kompakten Zugangsparameter enthält, wobei der mindestens eine kompakte Zugangsparameter mindestens einem Zugangsparameter zu einer im Webserver installierten Anwendung (WebApp) entspricht, wobei die Größe des mindestens einen kompakten Zugangsparameters kleiner ist als die Größe des mindestens einen Zugangsparameters zur im Webserver installierten Anwendung (WebApp);
Wiedergewinnung des mindestens einen Zugangsparameters zur Anwendung ausgehend vom mindestens einen kompakten Zugangsparameter;
Generierung (160) einer Benachrichtigung entsprechend einem für die Übertragung im Internet geeigneten zweiten Protokoll, in die die Benachrichtigungsdaten und der mindestens eine Zugangsparameter zur Anwendung eingefügt sind; und
Senden (170) der Benachrichtigung gemäß dem zweiten Protokoll zum Webserver (WS).

2. Verfahren zur Benachrichtigungsverwaltung nach Anspruch 1, das außerdem die folgenden Schritte enthält:
Empfang (131) einer Nachricht vom mobilen Endgerät, die den mindestens einen Zugangsparameter zur Anwendung enthält;
Generieren, ausgehend von dem mindestens einen Zugangsparameter zur Anwendung, des mindestens einen kompakten Zugangsparameters; und
Senden (133) einer Nachricht an das mobile Endgerät, die den kompakten Zugangsparameter enthält.

3. Verfahren zum Senden einer Benachrichtigung von einem in einem mobilen Endgerät (TE) installierten Benutzeragenten (UA) an einen Webserver (WS), wobei das Verfahren die folgenden Schritte enthält, die vom mobilen Endgerät durchgeführt werden:
Generieren (140) einer Benachrichtigung entsprechend einem für die Übertragung in einem Signalisierungskanal geeigneten ersten Protokoll, in die vom Benutzeragenten kommende Benachrichtigungsdaten und mindestens ein vom mobilen Endgerät eingefügter kompakter Zugangsparameter eingefügt sind, der mindestens einem Zugangsparameter zu einer im Webserver installierten Anwendung (WebApp) entspricht, wobei die Größe des kompakten Zugangsparameters kleiner ist als die Größe des Zugangsparameters zur Anwendung;
Senden (150) der Benachrichtigung zu einer Zwischeneinrichtung (NotifProxy), was die Generierung einer Benachrichtigung entsprechend einem für die Übertragung im Internet geeigneten zweiten Protokoll durch die Zwischeneinrichtung (160) hervorruft, in die die Benachrichtigungsdaten und der mindestens eine Zugangsparameter zur Anwendung eingefügt sind, und Übertragen (170) der Benachrichtigung gemäß dem zweiten Protokoll an den Webserver.

4. Verfahren zum Senden einer Benachrichtigung nach Anspruch 3, das außerdem die folgenden Schritte enthält:
Senden (131) einer Nachricht an die Zwischeneinrichtung (NotifProxy), die den mindestens einen Zugangsparameter zur im Webserver installierten Anwendung (WebApp) enthält; und
Empfang (133) einer Nachricht von der Zwischeneinrichtung, die den mindestens einen kompakten Zugangsparameter enthält.

5. Verfahren nach einem der Ansprüche 1 bis 4, das außerdem eine Entdeckungsphase (110) enthält, während der das mobile Endgerät die Adresse der Zwischeneinrichtung (add(NotifProxy)) bei einem Entdeckungsportal (DiscPort) wiedergewinnt, wobei die Adresse vom mobilen Endgerät beim Senden der Benachrichtigung und/oder der den Zugangsparameter zur Anwendung enthaltenden Nachricht verwendet wird.

6. Zwischeneinrichtung (NotifProxy) zum Verwalten der Benachrichtigungen zwischen einem im mobilen Endgerät (TE) installierten Benutzeragenten (UA) und einem Webserver (WS), wobei die Einrichtung enthält:
ein Sende-Empfangsmodul, das eine erste Benachrichtigung entsprechend einem für die Übertragung in einem Signalisierungskanal geeigneten ersten Protokoll vom mobilen Endgerät empfangen kann, die vom Benutzeragenten stammende Benachrichtigungsdaten und mindestens einen kompakten Zugangsparameter enthält; und
ein Datenverarbeitungsmodul, das konfiguriert ist:
eine erste Benachrichtigung entsprechend einem für die Übertragung im Internet geeigneten zweiten Protokoll zu generieren, in die die Benachrichtigungsdaten eingefügt sind;
mindestens einen Zugangsparameter zu einer im Webserver installierten Anwendung (WebApp) ausgehend von dem mindestens einen kompakten Zugangsparameter wiederzugewinnen, wobei die Größe des kompakten Zugangsparameters kleiner ist als die Größe des Zugangsparameters zur Anwendung; und
den mindestens einen Zugangsparameter zur Anwendung in die erste Benachrichtigung entsprechend dem zweiten Protokoll einzufügen;
wobei das Sende-Empfangsmodul konfiguriert ist, die erste Benachrichtigung gemäß dem zweiten Protokoll an den Webserver zu senden.

7. Zwischeneinrichtung nach Anspruch 6, wobei das Datenverarbeitungsmodul außerdem konfiguriert ist, den kompakten Zugangsparameter ausgehend vom vom mobilen Endgerät empfangenen Zugangsparameter zur Anwendung zu generieren, wobei das Sende-Empfangsmodul konfiguriert ist, den vom Datenverarbeitungsmodul generierten kompakten Zugangsparameter an das mobile Endgerät zu übertragen.

8. Zwischeneinrichtung nach einem der Ansprüche 6 bis 7, wobei:
das Sende-Empfangsmodul eine zweite Benachrichtigung entsprechend dem für die Übertragung im Internet geeigneten zweiten Protokoll vom Webserver empfangen kann (250), die vom Webserver kommende Benachrichtigungsdaten enthält;
das Datenverarbeitungsmodul konfiguriert ist, eine zweite Benachrichtigung entsprechend einem für die Übertragung in einem Signalisierungskanal geeigneten Protokoll zu generieren (260), in die die Benachrichtigungsdaten eingefügt sind;
das Sende-Empfangsmodul außerdem konfiguriert ist, die zweite Benachrichtigung entsprechend einem für die Übertragung in einem Signalisierungskanal geeigneten Protokoll an das mobile Endgerät zu senden (270).

9. Zwischeneinrichtung nach Anspruch 8, wobei der zum Empfang der vom mobilen Endgerät kommenden ersten Benachrichtigung verwendete Signalisierungskanal sich von dem Signalisierungskanal unterscheidet, der verwendet wird, um die zweite Benachrichtigung an das mobile Endgerät zu senden.

10. Mobiles Endgerät (TE), das ein Sende-Empfangsmodul und ein Datenverarbeitungsmodul enthält, in dem ein Benutzeragent (UA) installiert ist, der Daten mit einem Webserver (WS) austauscht, wobei:
das Datenverarbeitungsmodul konfiguriert ist, eine Benachrichtigung entsprechend einem für die Übertragung in einem Signalisierungskanal geeigneten ersten Protokoll zu generieren, wobei die Benachrichtigung vom Benutzeragenten kommende Benachrichtigungsdaten und mindestens einen kompakten Zugangsparameter enthält, der mindestens einem Zugangsparameter zu einer im Webserver installierten Anwendung (WebApp) entspricht, wobei die Größe des kompakten Zugangsparameters kleiner ist als die Größe des Zugangsparameters zur Server-Anwendung;
das Sende-Empfangsmodul konfiguriert ist, die Benachrichtigung an eine Zwischeneinrichtung (NotifProxy) zu senden, was die Generierung durch die Zwischeneinrichtung einer Benachrichtigung entsprechend einem für die Übertragung im Internet geeigneten zweiten Protokoll hervorruft, in die die Benachrichtigungsdaten und der Zugangsparameter zu einer im Webserver installierten Anwendung (WebApp) eingefügt sind, und an den Webserver die Benachrichtigung entsprechend dem zweiten Protokoll zu übertragen.

11. Mobiles Endgerät nach Anspruch 10, wobei das Sende-Empfangsmodul außerdem den mindestens einen Zugangsparameter zur Server-Anwendung an die Zwischeneinrichtung senden und im Gegenzug den mindestens einen kompakten Zugangsparameter empfangen kann, wobei das Datenverarbeitungsmodul außerdem konfiguriert ist, den kompakten Zugangsparameter in die Benachrichtigung entsprechend dem ersten Protokoll einzufügen.

12. Computerprogramm, das Anweisungen zur Durchführung der Schritte des Verfahrens nach einem der Ansprüche 1 bis 5 enthält, wenn es von einem Datenverarbeitungsmodul ausgeführt wird.

13. Informationsträger, der für einen Computer oder einen Datenprozessor lesbar ist, der Anweisungen eines Computerprogramms nach Anspruch 12 aufweist.

## Claims

1. Notification management method between a user agent (UA) installed in a mobile terminal (TE) and a web server (WS), the method comprising the following steps, carried out by an intermediate equipment (NotifProxy):
reception (150), from the mobile terminal, of a notification message in accordance with a first protocol suitable for transmission in a signalling channel, said notification message comprising notification data emanating from the user agent and at least one compact access parameter inserted by the mobile terminal, said at least one compact access parameter corresponding to at least one access parameter to an application (WebApp) installed in the web server, the size of said at least one compact access parameter being less than the size of said at least one access parameter to the application (WebApp) installed in the web server;
retrieval of said at least one access parameter to the application from said at least one compact access parameter;
generation (160) of a notification message in accordance with a second protocol suitable for transmission in the internet network, in which are inserted the notification data and said at least one access parameter to the application; and
transmission (170), to the web server (WS), of the notification message according to the second protocol.

2. Notification management method according to Claim 1, further comprising the following steps:
reception (131), from the mobile terminal, of a message comprising said at least one access parameter to the application;
generation, from said at least one access parameter to the application, of the at least one compact access parameter; and
transmission (133), to the mobile terminal, of a message comprising the compact access parameter.

3. Method for sending notifications from a user agent (UA) installed in a mobile terminal (TE) to a web server (WS), the method comprising the following steps, carried out by the mobile terminal:
generation (140) of a notification message in accordance with a first protocol suitable for transmission in a signalling channel, in which are inserted notification data emanating from the user agent and at least one compact access parameter inserted by the mobile terminal corresponding to at least one access parameter to an application (WebApp) installed in the web server, the size of the compact access parameter being less than the size of the access parameter to the application;
transmission (150) of the notification message to intermediate equipment (NotifProxy) triggering the generation by said intermediate equipment (160) of a notification message in accordance with a second protocol, suitable for transmission over the internet network, in which are inserted the notification data and said at least one access parameter to the application, and for transmission (170), to the web server, said notification message according to the second protocol.

4. Notification sending method according to Claim 3, further comprising the following steps:
transmission (131), to the intermediate equipment (NotifProxy), of a message comprising said at least one access parameter to the application (WebApp) installed in the web server; and
reception (133), from the intermediate equipment, of a message comprising said at least one compact access parameter.

5. Method according to one of Claims 1 to 4, further comprising a discovery phase (110) during which the mobile terminal recovers the address of the intermediate equipment (add(NotifProxy)) from a discovery portal (DiscPort), said address being used by the mobile terminal in the transmission of the notification message and/or of the message comprising the access parameter to the application.

6. Intermediate equipment (NotifProxy) for managing notifications between a user agent (UA) installed on a mobile terminal (TE) and a web server (WS), the equipment comprising:
a transceiver module capable of receiving, from the mobile terminal, a first notification message in accordance with a first protocol suitable for transmission in a signalling channel, comprising notification data emanating from the user agent and at least one compact access parameter; and
a data processing module configured to:
generate a first notification message in accordance with a second protocol suitable for transmission in the internet network, in which are inserted the notification data;
recovering at least one access parameter to an application (WebApp) installed in the web server, from said at least one compact access parameter, the size of the compact access parameter being less than the size of the access parameter to the application; and
inserting said at least one access parameter to the application in the first notification message in accordance with the second protocol;
the transceiver module being configured to transmit the first notification message according to the second protocol to the web server.

7. Intermediate equipment according to Claim 6, wherein the data processing module is further configured to generate the compact access parameter from the access parameter to the application received from the mobile terminal, the transceiver module being configured to transmit, to the mobile terminal, the compact access parameter generated by the data processing module.

8. Intermediate equipment according to one of Claims 6 and 7, wherein:
the transceiver module is capable of receiving (250), from the web server, a second notification message in accordance with the second protocol suitable for transmission in the internet network, comprising notification data emanating from the web server;
the data processing module is configured to generate (260) a second notification message in accordance with a protocol suitable for transmission in a signalling channel, in which are inserted the notification data;
the transceiver further being configured to transmit (270) the second notification message in accordance with a protocol suitable for transmission in a signalling channel to the mobile terminal.

9. Intermediate equipment according to Claim 8, wherein the signalling channel used to receive the first notification message originating from the mobile terminal is different from the signalling channel used to transmit the second notification message to the mobile terminal.

10. Mobile terminal (TE) comprising a transceiver module and a data processing module in which there is installed a user agent (UA) exchanging data with a web server (WS), wherein:
the data processing module is configured to generate a notification message in accordance with a first protocol suitable for transmission in a signalling channel, the notification message comprising notification data emanating from the user agent and at least one compact access parameter corresponding to at least one access parameter to an application (WebApp) installed in the web server, the size of the compact access parameter being less than the size of the access parameter to the server application;
the transceiver module is configured to transmit the notification message to an intermediate equipment (NotifProxy), provoking the generation by said intermediate equipment of a notification message in accordance with a second protocol suitable for transmission over the internet network, in which are inserted the notification data and the access parameter to an application (WebApp) installed in the web server, and for transmitting, to the web server, said notification message in accordance with the second protocol.

11. Mobile terminal according to Claim 10, wherein the transceiver module is further capable of sending, to the intermediate equipment, said at least one access parameter to the server application and of receiving, in return, said at least one compact access parameter, the data processing module being further configured to insert said compact access parameter in the notification message in accordance with the first protocol.

12. Computer program comprising instructions for the implementation of the steps of the method according to one of Claims 1 to 5, when it is executed by a data processing module.

13. Information medium, readable by a computer or a data processor, comprising instructions of a computer program according to Claim 12.
